# EUROPEAN PATENT APPLICATION

(11) **EP 4 564 464 A1**
(43) Date of publication of application: **04.06.2025**
(21) Application number: 23846467.1
(22) Date of filing: 24.07.2023
(51) Int. Cl.: H01M 4/139, B05D 3/12, B05D 5/12, H01M 4/04, H01M 4/62

(54) **METHOD FOR PRODUCING MOLDED BODY FOR SHEET-LIKE ELECTRODE**

(30) Priority: 28.07.2022 JP 2022120970
(71) Applicant: FUJIFILM Corporation, Tokyo 106-8620 (JP)
(72) Inventor: IWASE, Eijiro, ashigara-shi, Kanagawa 250-0193 (JP); TAKANO, Ikuo, ashigara-shi, Kanagawa 250-0193 (JP)
(74) Representative: Meissner Bolte Partnerschaft mbB
(86) International application number: PCT/JP2023/027041
(87) International publication number: WO 2024/024737

(57) **Abstract**

Provided is a manufacturing method of a molded body for a sheet-like electrode, including a first step of preparing granules containing one or both of an electrode active material and a conductive auxiliary agent, and a second step of obtaining a mixture of an electrode active material, a conductive auxiliary agent, and an electrolytic solution using the granules prepared in the first step, in which an electrode material film containing the electrode active material, the conductive auxiliary agent, and the electrolytic solution are formed on a support.

## Description

### BACKGROUND OF THE INVENTION

### 1. Field of the Invention

The present disclosure relates to a manufacturing method of a molded body for a sheet-like electrode.

### 2. Description of the Related Art

In recent years, development of a semi-solid state battery has been studied.

An electrode applied to the semi-solid state battery is manufactured using, for example, an electrode material containing at least an electrode active material which is a powder and an electrolytic solution.

For example, JP2020-129448A discloses a manufacturing method of an electrode for a battery, including a deposition step of depositing a powder consisting of granulated particles containing an electrode active material and a conductive auxiliary agent on a surface of a collector.

### SUMMARY OF THE INVENTION

As the electrode applied to the semi-solid state battery, a technique of applying a molded body for a sheet-like electrode, which contains a solid component such as an electrode active material at a high concentration as compared with an electrolytic solution, is desired to increase an energy density.

As a method of obtaining a molded body for a sheet-like electrode, which contains a solid component such as an electrode active material at a high concentration, for example, there is a method of molding the electrode material containing a solid component such as an electrode active material at a high concentration as compared with an electrolytic solution, on a support in a sheet shape. However, since the electrode material containing a high concentration of solid components has a small adhesion force (adhesive force) to the support due to a small amount of the electrolytic solution, an end part may collapse in a case where an attempt is made to obtain a sheet-like molded body on the support.

Here, the collapse at the end part of the molded body for a sheet-like electrode includes both a case in which the end part is finely collapsed and a case in which the end part is largely peeled off in a plate shape in the molded body for a sheet-like electrode, which is an aggregate of the electrode material, and can be confirmed with a CCD camera or the like.

Therefore, the present disclosure has been made in view of the above-described circumstances.

An object of one embodiment of the present disclosure is to provide a manufacturing method of a molded body for a sheet-like electrode, with which it is possible to manufacture a molded body for a sheet-like electrode having a high concentration of solid components with favorable formability.

Here, the "favorable formability" means that a molded body for a sheet-like electrode having a desired shape can be formed without collapse, chipping, or the like occurring at an end part.

The present disclosure includes the following aspects.
<1> A manufacturing method of a molded body for a sheet-like electrode, comprising:
   a first step of preparing granules containing one or both of an electrode active material and a conductive auxiliary agent; and
   a second step of obtaining a mixture of an electrode active material, a conductive auxiliary agent, and an electrolytic solution using the granules prepared in the first step,
   in which an electrode material film containing the electrode active material, the conductive auxiliary agent, and the electrolytic solution are formed on a support.
<2> The manufacturing method of a molded body for a sheet-like electrode according to <1>,
   in which the first step includes a granulation step of granulating one or both of the electrode active material and the conductive auxiliary agent.
<3> The manufacturing method of a molded body for a sheet-like electrode according to <2>,
   in which a maximum filling rate of the granules obtained by the granulation step is 55% by volume to 95% by volume.
<4> The manufacturing method of a molded body for a sheet-like electrode according to <2> or <3>,
   in which the granulation step is a step of granulating the electrode active material and the conductive auxiliary agent in combination.
<5> The manufacturing method of a molded body for a sheet-like electrode according to <4>,
   in which a volume average particle diameter of granules obtained by granulating the electrode active material and the conductive auxiliary agent in combination is 10 µm to 1,000 µm.
<6> The manufacturing method of a molded body for a sheet-like electrode according to <2> or <3>,
   in which the granulation step is a step of granulating one of the electrode active material or the conductive auxiliary agent or a step of granulating each of the electrode active material and the conductive auxiliary agent.
<7> The manufacturing method of a molded body for a sheet-like electrode according to <6>,
   in which a volume average particle diameter of granules obtained by granulating the electrode active material is 10 µm to 1,000 µm.
<8> The manufacturing method of a molded body for a sheet-like electrode according to <6>,
   in which a volume average particle diameter of granules obtained by granulating the conductive auxiliary agent is 0.2 µm to 50 µm.
<9> The manufacturing method of a molded body for a sheet-like electrode according to <2>,
   in which the granulation is performed by a dry-type granulation method.
<10> The manufacturing method of a molded body for a sheet-like electrode according to <2>,
   in which the granulation is performed by a wet-type granulation method using at least a part of the electrolytic solution.
<11> The manufacturing method of a molded body for a sheet-like electrode according to any one of <1> to <10>,
   in which the electrode material film containing the electrode active material, the conductive auxiliary agent, and the electrolytic solution is formed on the support by applying the mixture obtained in the second step onto the support.
<12> The manufacturing method of a molded body for a sheet-like electrode according to any one of <1> to <10>,
   in which the second step is a step of obtaining the mixture of the electrode active material, the conductive auxiliary agent, and the electrolytic solution on the support by applying the granules prepared in the first step onto the support.
<13> The manufacturing method of a molded body for a sheet-like electrode according to any one of <1> to <12>, further comprising:
   a step of applying pressure or applying vibration to the mixture of the electrode active material, the conductive auxiliary agent, and the electrolytic solution, which is disposed on the support.
<14> The manufacturing method of a molded body for a sheet-like electrode according to any one of <1> to <13>,
   in which the electrode material film has a thickness of 70 µm to 230 µm and a concentration of solid components of 50% by volume to 80% by volume.

According to one embodiment of the present disclosure, it is possible to provide a manufacturing method of a molded body for a sheet-like electrode, with which it is possible to manufacture a molded body for a sheet-like electrode having a high concentration of solid components with favorable formability.

### BRIEF DESCRIPTION OF THE DRAWINGS

Fig. 1 is a schematic cross-sectional view for describing a first aspect in the manufacturing method of a molded body for an electrode according to the present disclosure.
Fig. 2 is a schematic cross-sectional view for describing a second aspect in the manufacturing method of a molded body for an electrode according to the present disclosure.
Fig. 3 is a schematic cross-sectional view for describing a step of pressurizing an electrode material film.
Fig. 4 is a schematic view showing an image inspection device for evaluating formability of a molded body for a sheet-like electrode (electrode material film).

### DESCRIPTION OF THE PREFERRED EMBODIMENTS

Hereinafter, embodiments of the present disclosure will be described with reference to the accompanying drawings. The present disclosure is not limited in any way to the following embodiments, and may be implemented with appropriate modifications within the scope of the purpose of the present disclosure. The constituent elements indicated by the same reference numeral in each drawing mean the same constituent element. The description of redundant constitutional elements and reference numerals in each drawing may be omitted. A dimensional ratio in the drawings does not necessarily represent the actual dimensional ratio.

In the present disclosure, the numerical ranges shown using "to" indicate ranges including the numerical values described before and after "to" as the lower limit value and the upper limit value. Regarding numerical ranges that are described stepwise in the present disclosure, an upper limit value or a lower limit value described in a numerical range may be replaced with an upper limit value or a lower limit value of another stepwise numerical range. In addition, in a numerical range described in the present disclosure, an upper limit or a lower limit described in a certain numerical range may be replaced with a value described in Examples.

In the present disclosure, a term "step" denotes not only an individual step but also a step which is not clearly distinguishable from another step as long as an effect expected from the step can be achieved.

In the present disclosure, "(meth)acrylic" means either or both of acrylic and methacrylic.

In the present disclosure, in a case where a plurality of substances corresponding to each component in a composition is present, the amount of each component in the composition means the total amount of the plurality of substances present in the composition, unless otherwise specified.

In the present disclosure, a combination of two or more preferred aspects or forms is a more preferred aspect or form.

In the present disclosure, "solid component" means a component in a solid state at 25°C and 1 atm, and "liquid component" means a component in a liquid state at 25°C and 1 atm.

### <Manufacturing method of molded body for sheet-like electrode>

The manufacturing method of a molded body for a sheet-like electrode according to the present disclosure is a manufacturing method of a molded body for a sheet-like electrode, including a first step of preparing granules containing one or both of an electrode active material and a conductive auxiliary agent, and a second step of obtaining a mixture of an electrode active material, a conductive auxiliary agent, and an electrolytic solution using the granules prepared in the first step, in which an electrode material film containing the electrode active material, the conductive auxiliary agent, and the electrolytic solution are formed on a support.

Hereinafter, the "molded body for a sheet-like electrode" will also be simply referred to as "molded body for an electrode".

In the present disclosure, the term "granules" means granules obtained by solidifying a plurality of powders in a state in which air is included between the powders and molding the plurality of powders into a particle larger than the powder. That is, the granules have voids formed by air between the powders.

The molding of the powder into a larger particle is referred to as "granulation".

In the present disclosure, the electrode material film preferably has a thickness of 70 µm to 230 µm and a concentration of solid components of 50% by volume to 80% by volume. That is, in the manufacturing method of a molded body for an electrode according to the present disclosure, it is preferable to form an electrode material film having a thickness of 70 µm to 230 µm and a concentration of solid components of 50% by volume to 80% by volume.

In the present disclosure, "high concentration of solid components" means that the concentration of solid components is 50% by volume or more.

Here, the thickness of the electrode material film is an arithmetic average value of thicknesses at three points measured by cross-sectional observation. In the cross-sectional observation, a known microscope (for example, a scanning electron microscope) can be used.

In addition, the concentration of solid components in the electrode material film is calculated from a compositional ratio of each component contained in the electrode material film and a specific gravity of the components.

As described above, in a case where a molded body for a sheet-like electrode is formed on a support using an electrode material containing a solid component at a high concentration, it is difficult to obtain an electrode material film having a desired shape because an adhesion force (adhesive force) of such an electrode material to the support is small and an end part collapses.

Therefore, the present inventors have found a method of obtaining a molded body for a sheet-like electrode with favorable formability by utilizing a method of granulating a powder material. In a case where the electrode active material or the conductive auxiliary agent, which is a powder, is formed into granules, a surface area thereof can be reduced as compared with a surface area before the formation into granules. Since the electrode active material or the conductive auxiliary agent has a power to hold the electrolytic solution on the surface thereof, in a case where the surface area is reduced due to the granulation, the presence amount of the electrolytic solution in a fluidity state, which is not held by the granules or the like, is increased in the electrolytic solution in the electrode material. As a result, it is presumed that, in a case where the electrode active material or the conductive auxiliary agent is in the form of granules, the adhesion force to the support is exhibited even in an electrode material containing a solid component at a high concentration. As a result, it is possible to form a molded body for a sheet-like electrode with favorable formability.

JP2020-129448A discloses that a powder consisting of granulated particles containing an electrode active material and a conductive auxiliary agent is used. However, JP2020-129448A does not mention obtaining a mixture of an electrode active material, a conductive auxiliary agent, and an electrolytic solution using such granulated particles.

### [First step]

In the first step, granules containing one or both of an electrode active material and a conductive auxiliary agent are prepared.

In the present disclosure, the "preparing granules" means bringing granules into a usable state, and includes preparing granules unless otherwise specified. That is, in the first step, the granules prepared in advance or commercially available granules may be obtained, or the granules may be prepared.

Examples of the granules prepared in the present step include granules of an electrode active material, granules of a conductive auxiliary agent, and granules containing both an electrode active material and a conductive auxiliary agent (hereinafter, also referred to as composite granules).

### [Granulation step]

It is preferable that the first step includes a granulation step of granulating one or both of the electrode active material and the conductive auxiliary agent to obtain granules.

A method of granulating one or both of the electrode active material and the conductive auxiliary agent is not particularly limited as long as it is a method capable of granulating one or both of the electrode active material and the conductive auxiliary agent, and a dry-type granulation method or a wet-type granulation method is used. In a case where the wet-type granulation method is used, it is preferable to use at least a part of the electrolytic solution as the liquid component, from the viewpoint that the granules obtained by the granulation can be used as they are in the first step.

Specifically, the above-described granulation may be performed by a dry-type granulation method or a wet-type granulation method using at least a part of the electrolytic solution.

It is preferable that the electrode active material or the conductive auxiliary agent is subjected to a dispersion treatment before being applied to the dry-type granulation method or the wet-type granulation method.

In the granulation step, granules are mainly obtained (for example, 95% by volume or more), but a part of raw materials (electrode active material and conductive auxiliary agent, which are powders) may remain as raw materials which have not been granulated. In a case where the granules and the raw materials which have not been granulated are mixed in a particle group obtained after the granulation, the which have not been granulated may be removed with a sieve or the like.

In particular, in a case of obtaining the composite granules, in addition to the target granules containing both the electrode active material and the conductive auxiliary agent, there may be granules containing only one of the electrode active material or the conductive auxiliary agent or the raw materials which have not been granulated. In this case as well, the raw materials which have not been granulated may be removed as necessary.

Examples of a device used in the dry-type granulation method include dry-type granulation devices such as a dry-type granulator (roller compactor FT and the like) of FREUND-TURBO CORPORATION and a dry-type granulator (Chilsonator) of Powrex corp. In addition, as the device used in the dry-type granulation method, a known roller compounding machine can also be used.

The device used in the dry-type granulation method may be a device using a mechanochemical method. By using the device using a mechanochemical method, granules are obtained and a smoothing treatment is also performed on the surface of the powder.

Examples of a device used in the wet-type granulation method include wet-type granulation devices such as a fluidized bed granulation dryer (FD-MP-01 and the like) of Powrex corp.

As a liquid component used in the wet-type granulation method, it is preferable to use at least a part of the electrolytic solution. Specifically, examples of the liquid component used in the wet-type granulation method include a material which is solid at normal temperature (for example, 25°C), such as ethylene carbonate.

In a case where the material which is solid at normal temperature, such as ethylene carbonate, is used as the liquid component, the solid material may be passed through a spray head or the like, which has been heated (to a temperature equal to or higher than a melting point; for example, 60°C), to be converted into a liquid and then charged into the wet-type granulation device. The material which is solid at normal temperature and is charged into the wet-type granulation device is scattered from the spray head, and then is bound to the electrode active material and/or the conductive auxiliary agent in the device and solidified to be a part of the granules.

From the viewpoint of maintaining the granule state and the viewpoint that the granules are easily collapsed by mixing with the electrolytic solution, the maximum filling rate of the granules obtained in the granulation step is preferably 55% by volume to 95% by volume, more preferably 60% by volume to 90% by volume, and still more preferably 65% by volume to 85% by volume.

The maximum filling rate of the granules can be calculated from the particle diameter of the granules and the particle diameter and distribution of the powder contained in the granules.

The granulation step is preferably a step of granulating the electrode active material and the conductive auxiliary agent in combination. By this step, the above-described composite granules are obtained.

Here, "granulating the electrode active material and the conductive auxiliary agent in combination" refers to using both the electrode active material and the conductive auxiliary agent as raw materials and granulating the materials. The above-described dry-type granulation method or wet-type granulation method is adopted to the granulation. As a result, the composite granules, that is, granules containing both the electrode active material and the conductive auxiliary agent are obtained.

It is preferable that the electrode active material and the conductive auxiliary agent are mixed and dispersed before being applied to the dry-type granulation method or the wet-type granulation method, from the viewpoint of efficiently obtaining the composite granules. In order to mix and disperse the electrode active material and the conductive auxiliary agent, a known mixing and dispersing unit can be used.

A volume average particle diameter of the composite granules, that is, the granules obtained by granulating the electrode active material and the conductive auxiliary agent in combination is preferably 10 µm to 1,000 µm, more preferably 25 µm to 500 µm, still more preferably 50 µm to 300 µm, and particularly preferably 150 µm to 250 µm.

It is also preferable that the granulation step is a step of granulating one of the electrode active material or the conductive auxiliary agent or granulating each of the electrode active material and the conductive auxiliary agent.

A volume average particle diameter of the granules obtained by granulating the electrode active material is preferably 10 µm to 1,000 µm, more preferably 25 µm to 500 µm, and particularly preferably 50 µm to 300 µm.

In addition, a volume average particle diameter of the granules obtained by granulating the conductive auxiliary agent is preferably 0.2 µm to 50 µm, more preferably 10 µm to 50 µm, and particularly preferably 20 µm to 50 µm.

Here, the volume average particle diameter of the granules can be measured with a dry method of measuring the particle diameter, for example, a method using a laser diffraction/scattering-type particle size distribution analyzer.

Details of the electrode active material, the conductive auxiliary agent, the electrolytic solution, and the like used in the present step and the second step will be described later.

### [Second step]

In the second step, a mixture of an electrode active material, a conductive auxiliary agent, and an electrolytic solution is obtained using the granules prepared in the first step.

The mixture obtained in the present step is obtained by mixing the granules prepared in the first step with a component other than the granules. The component other than the granules refers to a component other than the component introduced by the granules, among the components for obtaining a mixture of the electrode active material, the conductive auxiliary agent, and the electrolytic solution. For example, in a case where the granules prepared in the first step are granules of the electrode active material, the component other than the granules is at least a conductive auxiliary agent and an electrolytic solution, and an additive may be contained as necessary. In addition, for example, in a case where the granules prepared in the first step are composite granules of the electrode active material and the conductive auxiliary agent, the component other than the granules is at least an electrolytic solution, and an additive may be contained as necessary.

As the component other than the granules, at least one of a non-granular electrode active material or a non-granular conductive auxiliary agent may be contained.

In the manufacturing method of a molded body for an electrode according to the present disclosure, the electrode material film containing the electrode active material, the conductive auxiliary agent, and the electrolytic solution can be formed on the support by applying, onto the support, the mixture of the electrode active material, the conductive auxiliary agent, and the electrolytic solution obtained in the present step, or by performing the present step on the support to obtain the mixture of the electrode active material, the conductive auxiliary agent, and the electrolytic solution.

That is, as a first aspect of the manufacturing method of a molded body for an electrode according to the present disclosure, an aspect in which the mixture obtained in the present step is applied onto the support to form an electrode material film containing the electrode active material, the conductive auxiliary agent, and the electrolytic solution on the support can be mentioned.

In addition, as a second aspect of the manufacturing method of a molded body for an electrode according to the present disclosure, an aspect in which the present step is a step of applying the granules prepared in the first step onto the support to obtain a mixture of the electrode active material, the conductive auxiliary agent, and the electrolytic solution on the support can be mentioned.

### [First aspect]

The above-described first aspect will be described.

In the first aspect, a mixture to be applied onto a support is prepared, and the prepared mixture is applied onto the support.

As a method of preparing the mixture to be applied onto the support, any mixing unit which can mix the granules prepared in the first step and the component other than the granules can be used without limitation.

As the mixing unit, for example, a ball mill, a beads mill, a planetary mixer, a blade mixer, a roll mill, a kneader, or a disc mill can be used.

A unit for applying the mixture obtained as described above onto the support may be any unit as long as the mixture can be applied onto the support in a necessary amount.

As the applying unit of the mixture to the support, for example, a unit which intermittently or continuously supplies the mixture onto the support (for example, a hopper, a screw feeder, a disc feeder, or a vibration feeder) can be used.

In addition, in a case where the mixture is applied onto the support, a restriction frame or a mesh frame can also be used from the viewpoint of homogenizing the application of the mixture.

### [Second aspect]

The above-described second aspect will be described.

In the second aspect, in the second step, the granules prepared in the first step are applied onto the support, and a mixture of the electrode active material, the conductive auxiliary agent, and the electrolytic solution is obtained on the support.

Specifically, in the second aspect, the granules prepared in the first step and the component other than the granules are separately applied onto the support. As a result, the granules and the component other than the granules are mixed on the support, and a mixture of the electrode active material, the conductive auxiliary agent, and the electrolytic solution is obtained.

When the component other than the granules is applied onto the support, in a case where the components other than the granules are two or more kinds (for example, two kinds of the conductive auxiliary agent and the electrolytic solution), the components may be applied separately onto the support, or a mixture thereof may be applied onto the support.

In addition, in a case where the granules prepared in the first step and the component other than the granules are separately applied onto the support, it is preferable that the component other than the granules, containing the electrolytic solution, is applied onto the support in advance, and then the granules prepared in the first step are applied thereon. In a case where the order is as described above, adhesiveness to the support by the electrolytic solution is easily obtained, and the electrode material film can be formed with favorable formability.

As an applying unit of the granules prepared in the first step to the support, the same unit as the unit for applying the mixture in the first aspect to the support can be used.

In addition, an applying unit of the component other than the granules to the support may be appropriately selected depending on the type of the component other than the granules. Specifically, as the applying unit of the component other than the granules to the support, in addition to the unit for applying the mixture in the first aspect onto the support, various coating units (for example, coating units using a slit coating method, a bar coating method, a blade coating method, and the like) can also be used.

According to the first aspect or the second aspect described above, the mixture of the electrode active material, the conductive auxiliary agent, and the electrolytic solution is disposed on the support. From the viewpoint of easily collapsing the granules, making the mixing of the respective components more uniform, and forming an electrode material film in which the concentration distribution of the respective components is uniform, it is preferable that pressure is applied or vibration is applied to the mixture of the electrode active material, the conductive auxiliary agent, and the electrolytic solution, which is disposed on the support.

That is, in the manufacturing method of a molded body for an electrode according to the present disclosure, it is preferable to further include a step of applying pressure or applying vibration to the mixture of the electrode active material, the conductive auxiliary agent, and the electrolytic solution, which is disposed on the support.

As a method of applying pressure to the mixture on the support, a unit which applies pressure from the upper part of the mixture toward the support may be used.

Specific examples of the method of applying pressure to the mixture include a method of pressing the mixture from the upper part toward the support with a pressing member. At this time, from the viewpoint of suppressing volatilization of the liquid component, it is preferable that a film is placed on the mixture, and the mixture is pressed with a pressing member from above the film.

Examples of the pressing member include a blade, a plate-shaped member such as a scraper, a roller, a flat plate press machine, and a roll press machine.

As described above, the mixture on the support is pressed by the pressing member. In this case, the mixture may be pressed by the pressing member until a thickness of the mixture obtained after the pressing, that is, the electrode material film reaches the set thickness in the above-described thickness of 70 µm to 230 µm.

As a method of applying vibration to the mixture on the support, a unit for applying vibration to the mixture may be used.

Specifically, the method of applying vibration to the mixture may be a method of applying vibration to the mixture by bringing a vibrating member into contact with the mixture from the upper part of the mixture, or may be a method of applying vibration to the mixture by vibrating a support on which the mixture is disposed.

As the vibrating member, the same member as the above-described pressing member is used. By vibrating the pressing member, the mixture in contact with the vibrating pressing member can be vibrated.

In particular, from the viewpoint of forming an electrode material film in which the thickness is uniform and the concentration distribution of the respective components is uniform, it is preferable that pressure is applied to the mixture on the support and vibration is applied thereto. Specifically, it is preferable that the pressing is performed by a vibrating pressing member from an upper part of the mixture on the support toward the support.

The vibration direction in a case where the pressing member vibrates is not particularly limited. In addition, the vibration of the pressing member may be continuous or intermittent.

An amplitude of the vibration of the pressing member is, for example, preferably 0.1 µm to 60 µm and more preferably 1 µm to 10 µm.

In addition, a frequency of the vibration of the pressing member is, for example, preferably 50 Hz to 40,000 Hz and more preferably 100 Hz to 37,500 Hz. The frequency of the vibration of the pressing member may include a plurality of frequencies. For example, the vibration of the pressing member may be a vibration in which a plurality of frequency peaks of 150 Hz, 300 Hz, and 450 Hz are detected.

Here, the amplitude and the frequency of the vibration can be measured using an acceleration sensor or a vibration measuring instrument. In a case where a plurality of frequency peaks are detected during the measurement of the vibration of the pressing member, a frequency having the smallest value is referred to as the "frequency of the vibration of the pressing member", and an amplitude at this frequency is referred to as the "amplitude of the vibration of the pressing member". For example, in a case where a plurality of frequency peaks of 150 Hz, 300 Hz, and 450 Hz are detected for the vibration of the pressing member, 150 Hz is defined as the "frequency of the vibration of the pressing member", and an amplitude at the frequency of 150 Hz is defined as the "amplitude of the vibration of the pressing member".

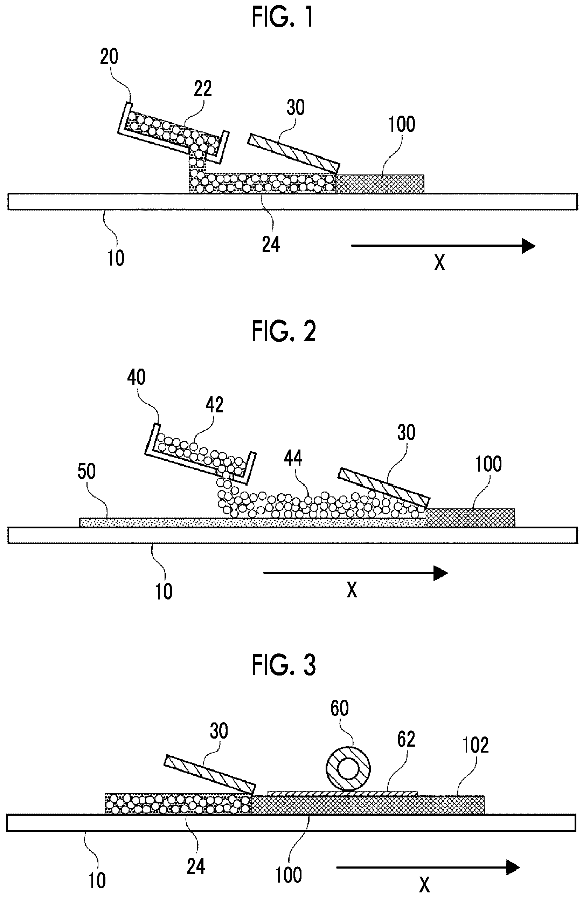

Hereinafter, examples of the manufacturing method of a molded body for an electrode according to the present disclosure will be described with reference to Figs. 1 and 2.

Fig. 1 is a schematic cross-sectional view for describing the above-described first aspect, and Fig. 2 is a schematic cross-sectional view for describing the above-described second aspect.

In the first aspect shown in Fig. 1, first, a mixture 22 is continuously applied from an applying unit 20 which stores the mixture 22 containing the granules onto a support 10 which moves in the arrow X direction, and a film 24 is formed on the support 10 by the mixture 22. Subsequently, the film 24 of the mixture 22 on the support 10 is pressed using a blade 30 as a pressing member.

More specifically, as shown in Fig. 1, the blade 30 is installed such that a distal end is in contact with the film 24 and a constant distance is maintained from the surface of the support 10. By moving the blade 30 on the support 10 in the arrow X direction, a void between the surface of the support 10 and the distal end of the blade 30 is passed through the film 24 formed on the support 10, and pressure is applied to the film 24 from the blade 30. In addition, at this time, the thickness of the film 24 can be regulated to the same thickness as the above-described void. As described above, in a case where the blade 30 applies pressure to the film 24, the granules in the film 24 collapse, and an electrode material film 100 containing the electrode active material, the conductive auxiliary agent, and the electrolytic solution is obtained.

At this time, the blade 30 may vibrate and apply vibration to the film 24.

In the second aspect shown in Fig. 2, first, a film 50 of an electrolytic solution is formed on the support 10 which moves in the arrow X direction. Subsequently, composite granules 42 are continuously applied onto the film 50 of the electrolytic solution by an applying unit 40 storing the composite granules 42, and a film 44 of the composite granules 42 is formed on the film 50. Furthermore, the film 50 and the film 44 formed on the support 10 are pressed using the blade 30 which is a pressing member.

More specifically, as shown in Fig. 2, the blade 30 is installed such that a distal end is in contact with the film 44 and a constant distance is maintained from the surface of the support 10. By moving the blade 30 on the support 10 in the arrow X direction, a void between the surface of the support 10 and the distal end of the blade 30 is passed through a laminated product of the film 50 and the film 44, which is formed on the support 10, and pressure is applied to the laminated product. In addition, at this time, the thickness of the laminated product of the film 50 and the film 44 can be regulated to the same thickness as the above-described void. As described above, in a case where the blade 30 applies pressure to the laminated product of the film 50 and the film 44, the granules in the film 44 collapse, and an electrode material film 100 containing the electrode active material, the conductive auxiliary agent, and the electrolytic solution is obtained by mixing the film 50 and the film 44.

In the above-described example, the film 50 is a film obtained by the electrolytic solution, but the present invention is not limited to this aspect. For example, the film 50 may be a film containing the electrolytic solution and at least one of the electrode active material or the conductive auxiliary agent. In this case, at least one of the electrode active material or the conductive auxiliary agent contained together with the electrolytic solution may or may not be granulated. In addition, a concentration of solid components in the film containing the electrolytic solution and at least one of the electrode active material or the conductive auxiliary agent is preferably 1% by volume to 40% by volume.

As described above, before the step of applying pressure or applying vibration to the mixture containing the electrode active material, the conductive auxiliary agent, and the electrolytic solution, which is disposed on the support, the laminate of the support and the mixture can be divided in the plane direction of the support.

In this aspect, a laminate having a large area is formed, and then the laminate is divided into laminates having a smaller area (for example, an area of an electrode).

It is preferable that pressure is applied to the mixture or vibration is applied to the mixture after the step of dividing the laminate of the support and the mixture in the plane direction of the support.

In the above-described aspect, it is preferable to use a support in which at least a surface on which the mixture is disposed can be divided in the plane direction in advance.

As the above-described support, for example, a support in which a plurality of metal layers (layers serving as a collector) having a desired size are arranged on a resin film to be spaced from each other, a resin film portion between the metal layers is bent toward a side opposite to the metal layer side, and the spaced metal layers are brought into contact with each other without a gap may be used. In such a support, the space between the metal layers in contact with each other without a gap can be divided to divide the laminate of the support and the mixture in the plane direction of the support.

As described above, an electrode material film containing an electrode active material, a conductive auxiliary agent, and an electrolytic solution is formed on the support.

In order to continuously form the electrode material film, that is, in order to form the electrode material film which is a continuous film, an aspect in which a long support is used, and transported and moved with respect to a fixed granule applying unit (for example, the above-described applying unit 40 storing the composite granules 42 or the applying unit 40 storing the composite granules 42) is preferable.

Here, a known transporting unit can be used as a unit for moving the support. As the transport unit of the support, specifically, for example, a belt conveyor, a linear motion guide, a cross roller table, or the like can be used.

Details of the support will be described later.

As described above, the electrode material film is formed on the support.

The support used herein is not particularly limited as long as it is a support capable of forming an electrode material film on the surface. In particular, from the viewpoint of continuously forming the electrode material film, it is preferable to use a long support. In a case of the long support, a width thereof may be determined according to the size of the electrode material film, a width of the above-described pressing member (for example, a blade or a roller) in a width direction, and the like.

Details of the support will be described later.

The obtained electrode material film can be formed into a molded body for a sheet-like electrode as it is or by further pressurizing the film.

### [Other steps]

The manufacturing method of a molded body for an electrode according to the present disclosure may include other steps.

Examples of the other steps include a step of pressurizing the electrode material film, and a step of, in a case where the support is release paper, transferring the electrode material film formed on the release paper to a collector.

### (Step of pressurizing electrode material film)

The manufacturing method of a molded body for an electrode according to the present disclosure may include a step of pressurizing the electrode material film.

In a case where the manufacturing method of a molded body for an electrode according to the present disclosure includes the pressurization step, a density of the electrode material can be increased, and a density of the solid components and in-plane uniformity of density and thickness can be achieved.

In the present step, for example, the electrode material film can be pressurized with a method shown in Fig. 3. Fig. 3 is a schematic cross-sectional view for describing a step of pressurizing the electrode material film.

Fig. 3 shows a step of pressing the film 24 using the blade 30 to form the electrode material film 100 on the support 10, and then pressurizing the formed electrode material film 100. In the example shown in Fig. 3, a film 62 is placed on the electrode material film 100 formed on the support 10, and the electrode material film 100 is pressurized by pressing a pressurization roller 60 from above the film 62. In a case where the electrode material film 100 is pressurized, a compressed electrode material film 102 is obtained.

The present step is not limited to the aspect shown in Fig. 3, and for example, a method using a press machine and a pair of pressurization rollers as the pressurizing unit may be used. Furthermore, as the pressurizing unit, a vibrating pressurization roller or a vibrating horn may also be used.

In a case of pressurizing the electrode material film, a pressure is preferably 0.01 MPa to 100 MPa, more preferably 0.1 MPa to 50 MPa, and particularly preferably 0.2 MPa to 10 MPa.

In the present step, the electrode material film may be pressurized stepwise using a plurality of pressurizing units. By stepwise pressurizing the electrode material film using a plurality of pressurizing units, the density and thickness of the electrode material can be made more uniform.

In the present step, it is preferable to move the pressurizing unit and the electrode material film (specifically, the support on which the electrode material film has been formed) relative to each other.

In the present disclosure, "moving the pressurizing unit and the electrode material film relative to each other" includes moving the pressurizing unit in one direction with respect to the electrode material film, moving the electrode material film in one direction with respect to the pressurizing unit, and moving the pressurizing unit and the electrode material film in one direction, respectively; but it is preferable to move the electrode material film in one direction with respect to the pressurizing unit.

A unit for moving the electrode material film (specifically, the support on which the electrode material film has been formed) is not limited, and known transport units can be used. Examples thereof include a belt conveyor, a linear motion guide, and a cross roller table.

In the present step, from the viewpoint of improving formability, for example, the electrode material film heated at 30°C to 100°C may be pressurized.

Hereinafter, the support and the pressing member, which are used in the manufacturing method of a molded body for an electrode according to the present disclosure, will be described in detail.

In addition, details of each component used for obtaining the electrode material film, such as the electrode active material, the conductive auxiliary agent, and the electrolytic solution, will also be described.

### [Support]

Specific examples of a preferred support include a collector.

The collector which is an example of the support is not particularly limited, and a known collector (a positive electrode collector and a negative electrode collector) can be used.

Examples of the positive electrode collector include aluminum, an aluminum alloy, stainless steel, nickel, and titanium. The positive electrode collector is preferably aluminum or an aluminum alloy. The positive electrode collector may be aluminum having, on a surface thereof, a coating layer containing one or more of carbon, nickel, titanium, silver, gold, platinum, and vanadium oxide.

Examples of the negative electrode collector include aluminum, copper, a copper alloy, stainless steel, nickel, and titanium. The negative electrode collector is preferably aluminum, copper, a copper alloy, or stainless steel, and more preferably copper or a copper alloy. The negative electrode collector may be copper or stainless steel, having, on a surface thereof, a coating layer containing one or more of carbon, nickel, titanium, silver, and lithium.

The collector is preferably an aluminum foil (including an aluminum foil having the above-described coating layer on the surface thereof) or a copper foil (including a copper foil having the above-described coating layer on the surface thereof). The aluminum foil is generally used as a collector in a positive electrode. The copper foil is generally used as a collector in a negative electrode.

In addition, the support may be a laminate of the metal layer exemplified as the positive electrode collector or the negative electrode collector described above and a resin film. Examples of the resin film used in the laminate include resin films such as a polyethylene terephthalate (PET) film, a polypropylene (PP) film, a polyethylene (PE) film, a cyclic olefin polymer (COP or COC) film, a triacetyl cellulose (TAC) film, a polyimide (PI) film, and a polyamide (PA) film.

In addition, examples of the support include a release material.

Examples of the release material which is an example of the support include release paper (for example, peeling paper manufactured by LINTEC Corporation), a film having a release layer, and paper having a release layer; and among these, release paper is preferable.

In a case where the release material is used as the support, the electrode material film formed on the release material can be transferred to the collector by utilizing releasability of the release material.

From the viewpoint of transportability and the like, a thickness of the support (preferably, the collector) is preferably 3 µm or more, more preferably 5 µm or more, and particularly preferably 10 µm or more.

From the viewpoint of flexibility and lightness, the thickness is preferably 100 µm or less, more preferably 70 µm or less, and particularly preferably 50 µm or less.

The thickness of the support is measured by the same method as the average thickness of the electrode material film.

A size of the support is not limited, and may be determined according to the size of the molded body for an electrode to be manufactured, the size of various members used in the manufacturing process, and the like.

In addition, in the present step, as a transporting unit of the support, the transporting unit of the support in the first step and the second step can be adopted.

### [Pressing member]

Preferred examples of the pressing member include a blade and a roller.

As described above, the blade and the roller as the pressing member may vibrate in a case of coming into contact with the mixture, and the mixture can be vibrated by using the vibrating pressing member.

### (Blade)

The blade is a member having a plate-like shape, but the shape, size, material, and the like of a contact portion which comes into contact with the mixture may be appropriately determined depending on the physical properties (the kind of the electrode active material, the concentration of solid components, the composition (viscosity, surface tension, and the like) of the electrolytic solution, and the like) of the mixture, the size and thickness of the electrode material film to be formed, and the like.

In addition, it is preferable that the contact portion of the blade with the mixture is less likely to have the electrode material adhere thereto; and for example, at least the surface of the blade preferably exhibits releasability.

For example, the blade may be made of a fluororesin such as polytetrafluoroethylene (PTFE) or a resin such as polyether ether ketone (PEEK), may be made of a metal such as stainless steel, aluminum, iron, or a hard alloy, or may be made of a ceramic.

In addition, in order to impart the releasability to the surface, the blade may include a surface layer (for example, a surface layer containing a fluorine-based resin, and a surface layer containing silicon-based particles and a resin) exhibiting the releasability.

Furthermore, from the viewpoint of improving abrasion resistance, the blade may include a high-hardness coating film such as titanium oxide, titanium nitride (TiN), and tungsten carbide on a metal or ceramic blade body.

### (Roller)

The roller is a member in which an outer peripheral surface is rotatable, but the shape, size, material, and the like of the roller may be appropriately determined depending on the physical properties (the kind of the electrode active material, the concentration of solid components, the composition (viscosity, surface tension, and the like) of the electrolytic solution, and the like) of the mixture, the size and thickness of the electrode material film to be formed, and the like.

The material constituting the outer peripheral surface of the roller may be the same as that of the blade, and may have a surface layer exhibiting releasability.

An outer diameter of the roller is not particularly limited, but may be, for example, 20 mm to 30 mm.

In addition, since the roller rotates, a friction coefficient between the outer peripheral surface of the roller and the mixture can be considered to be 0. However, as a result, since adhesiveness with the mixture may be increased, it is preferable that a film is interposed between the mixture and the outer peripheral surface of the roller.

### [Components constituting electrode material film]

The electrode material film contains an electrode active material, a conductive auxiliary agent, and an electrolytic solution, and may contain an additive as necessary.

### (Electrode active material)

The electrode active material is a substance capable of intercalating and deintercalating ions of a metal element belonging to Group 1 or Group 2 in the periodic table. The electrode active material is included in the solid components.

Examples of the electrode active material include a positive electrode active material and a negative electrode active material.

### -Positive electrode active material-

The positive electrode active material is not limited, and a known electrode active material used for a positive electrode can be used. The positive electrode active material is preferably a positive electrode active material capable of reversibly intercalating and deintercalating lithium ions.

Specific examples of the positive electrode active material include a transition metal oxide and an element (for example, sulfur) which can be compounded with lithium. Among the above, the positive electrode active material is preferably a transition metal oxide.

The transition metal oxide is preferably a transition metal oxide containing at least one transition metal element (hereinafter, referred to as "element Ma") selected from the group consisting of cobalt (Co), nickel (Ni), iron (Fe), manganese (Mn), copper (Cu), and vanadium (V).

In a case where the transition metal oxide contains Li and the element Ma, a molar ratio (Li/Ma) of Li to Ma is preferably 0.3 to 2.2.

In addition, the transition metal oxide may contain at least one transition metal element (hereinafter, referred to as "element Mb") selected from the group consisting of a Group 1 element other than lithium, a Group 2 element, aluminum (Al), gallium (Ga), indium (In), germanium (Ge), tin (Sn), lead (Pb), antimony (Sb), bismuth (Bi), silicon (Si), phosphorus (P), and boron (B). A content of the element Mb is preferably 0 mol% to 30 mol% with respect to a substance amount of the element Ma.

Examples of the transition metal oxide include transition metal oxides having a bedded salt-type structure, transition metal oxides having a spinel-type structure, lithium-containing transition metal phosphoric acid compounds, lithium-containing transition metal halogenated phosphoric acid compounds, and lithium-containing transition metal silicate compounds.

Examples of the transition metal oxide having a bedded salt-type structure include LiCoO₂ (lithium cobalt oxide [LCO]), LiNi₂O₂ (lithium nickelate), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Examples of the transition metal oxide having a spinel-type structure include LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compound include an olivine-type iron phosphate salt (for example, LiFePO₄ and Li₃Fe₂(PO₄)₃), a pyrroline phosphate salt (for example, LiFeP₂O₇), a cobalt phosphate salt (for example, LiCoPO₄), and a monoclinic vanadium phosphate salt (for example, Li₃V₂(PO₄)₃ (lithium vanadium phosphate)).

Examples of the lithium-containing transition metal halogenated phosphoric acid compound include an iron fluorophosphate (for example, Li₂FePO₄F), a manganese fluorophosphate (for example, Li₂MnPO₄F), and a cobalt fluorophosphate (for example, Li₂CoPO₄F).

Examples of the lithium-containing transition metal silicate compound include Li₂FeSiO₄, Li₂MnSiO₄, and Li₂CoSiO₄.

The transition metal oxide is preferably a transition metal oxide having a bedded salt-type structure, and more preferably at least one compound selected from the group consisting of LiCoO₂ (lithium cobalt oxide [LCO]), LiNi_{0.85}Co_{0.10}Al_{0.05}O₂ (lithium nickel cobalt aluminum oxide [NCA]), and LiNi_{1/3}Co_{1/3}Mn_{1/3}O₂ (lithium nickel manganese cobalt oxide [NMC]).

The positive electrode active material may be a commercially available product, or may be a synthetic product produced with a known method (for example, a baking method). For example, a positive electrode active material obtained by the baking method may be washed with water, an acidic aqueous solution, an alkaline aqueous solution, or an organic solvent.

In addition, the positive electrode active material may have a carbon coating on the surface thereof.

A shape of the positive electrode active material is not limited, but from the viewpoint of handle ability, it is preferably a particle shape.

A volume average particle diameter of the positive electrode active material is not limited, and can be, for example, 0.1 µm to 50 µm. The volume average particle diameter of the positive electrode active material is preferably 0.3 µm to 40 µm and more preferably 0.5 µm to 30 µm.

In a case where the volume average particle diameter of the positive electrode active material is 0.3 µm or more, it is possible to suppress the positive electrode active material from being scattered during handling. In a case where the volume average particle diameter of the positive electrode active material is 40 µm or less, the thickness of the molded body for an electrode can be easily adjusted, and generation of voids in the molding process can be suppressed.

The volume average particle diameter of the positive electrode active material is measured by the following method.

A dispersion liquid containing 0.1% by mass or less of the positive electrode active material is prepared by mixing the positive electrode active material with a solvent (for example, pure water, ethanol, heptane, octane, toluene, or xylene). The dispersion liquid is irradiated with ultrasonic waves of 1 kHz for 10 minutes to be used as a measurement sample. Using a laser diffraction/scattering-type particle size distribution analyzer (for example, LA-960 manufactured by Horiba, Ltd.), data is taken in 50 times under a condition of a temperature of 25°C, and a volume average particle diameter is obtained from a volume frequency-particle size distribution.

A quartz cell is used as a cell for the measurement. The above-described measurement is carried out using five samples, and an average of the measured values is defined as the volume average particle diameter of the positive electrode active material. For other detailed conditions, "JIS Z 8828: 2013" is referred to as necessary.

Examples of a method of adjusting the particle diameter of the positive electrode active material include a method of using a pulverizer, a disintegrator, or a classifier. In addition, a known milling method may be applied as the method of adjusting the particle diameter of the positive electrode active material.

One kind of the positive electrode active material may be used alone, or two or more kinds thereof may be used in combination.

In addition, even in a case of using one kind of the positive electrode active material, positive electrode active materials having different particle diameters may be used in combination.

A content of the positive electrode active material with respect to the total volume of the electrode material film is preferably 30% by volume to 60% by volume, more preferably 35% by volume to 55% by volume, and still more preferably 40% by volume to 50% by volume.

In the manufacturing method of a molded body for an electrode according to the present disclosure, the amount of the positive electrode active material used is determined such that the content in the electrode material film is within the above-described range.

### -Negative electrode active material-

The negative electrode active material is not limited, and a known electrode active material used for a negative electrode can be used. The negative electrode active material is preferably a negative electrode active material capable of reversibly intercalating and deintercalating lithium ions.

Examples of the negative electrode active material include a carbonaceous material, a metal oxide (for example, tin oxide), silicon oxide, a metal composite oxide, a lithium single substance, a lithium alloy (for example, a lithium aluminum alloy), and a metal capable of forming an alloy with lithium (for example, Sn, Si, and In). Among the above, from the viewpoint of reliability, the negative electrode active material is preferably a carbonaceous material or a lithium composite oxide.

The carbonaceous material is a material substantially consisting of carbon.

Examples of the carbonaceous material include a carbonaceous material obtained by firing petroleum pitch, carbon black (for example, acetylene black), graphite (for example, natural graphite or artificial graphite (for example, vapor-grown graphite)), hard carbon, and a synthetic resin (for example, polyacrylonitrile (PAN) and a furfuryl alcohol resin). Examples of the carbonaceous material also include carbon fiber (for example, polyacrylonitrile-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber). Examples of the graphite include mesophase microsphere, graphite whisker, and plate-like graphite.

In the present disclosure, the "plate-like" means a shape having two principal planes facing opposite to each other.

The metal composite oxide is preferably a metal composite oxide capable of intercalating and deintercalating lithium.

From the viewpoint of high current density-charging and discharging characteristics, the metal composite oxide capable of intercalating and deintercalating lithium preferably contains at least one element selected from the group consisting of titanium and lithium.

The metal oxide and the metal composite oxide are particularly preferably an amorphous oxide.

The metal oxide and the metal composite oxide are also preferably a chalcogenide. The chalcogenide is a reaction product of a metal element and an element of Group 16 in the periodic table.

Among compound groups consisting of the amorphous oxide and the chalcogenide, an amorphous oxide of a metalloid element or a chalcogenide is preferable, and an oxide containing at least one element selected from the group consisting of elements belonging to Group 13 to Group 15 in the periodic table, Al, Ga, Si, Sn, Ge, Pb, Sb, and Bi, or a chalcogenide is more preferable.

It is also preferable that the negative electrode active material further contains titanium. From the viewpoint that the negative electrode active material containing titanium has excellent high-speed charging and discharging characteristics due to small volume changes during the intercalation and deintercalation of lithium ions, and the suppression of the deterioration of the electrode can improve life of a lithium ion secondary battery, it is preferable that the negative electrode active material containing titanium is lithium titanium oxide (Li₄Ti₅O₁₂ [LTO]).

The negative electrode active material may be a commercially available product, or may be a synthetic product produced with a known method (for example, a baking method). For example, a negative electrode active material obtained by the baking method may be washed with water, an acidic aqueous solution, an alkaline aqueous solution, or an organic solvent.

The negative electrode active material is available, for example, as CGB20 (Nippon Kokuen Group).

The composition of the negative electrode active material is measured by inductively coupled plasma (ICP) emission spectroscopy.

A shape of the negative electrode active material is not limited, but is preferably a particle shape from the viewpoint of ease of handling and ease of managing uniformity in a case of mass production.

A volume average particle diameter of the negative electrode active material is preferably 0.1 µm to 60 µm, more preferably 0.3 µm to 50 µm, and particularly preferably 0.5 µm to 40 µm.

The volume average particle diameter of the negative electrode active material is measured with a method based on the method of measuring the volume average particle diameter of the positive electrode active material described above.

Examples of a method of adjusting the particle diameter of the negative electrode active material include a method of using a pulverizer or a classifier.

One kind of the negative electrode active material may be used alone, or two or more kinds thereof may be used in combination.

In addition, even in a case of using one kind of the negative electrode active material, negative electrode active materials having different particle diameters may be used in combination.

A content of the negative electrode active material with respect to the total volume of the electrode material film is preferably 30% by volume to 60% by volume, more preferably 35% by volume to 57% by volume, and still more preferably 45% by volume to 55% by volume.

In the manufacturing method of a molded body for an electrode according to the present disclosure, the amount of the negative electrode active material used is determined such that the content in the electrode material film is within the above-described range.

Surfaces of the positive electrode active material and the negative electrode active material may be coated with a surface coating agent, respectively. Examples of the surface coating agent include a metal oxide containing Ti, Nb, Ta, W, Zr, Si, or Li. Examples of the above-described metal oxide include a titanium oxide spinel, a tantalum-based oxide, a niobium-based oxide, and a lithium niobate-based compound.

### (Conductive auxiliary agent)

From the viewpoint of improving electron conductivity of the electrode active material, the electrode material film contains a conductive auxiliary agent. The conductive auxiliary agent is not limited, and a known conductive auxiliary agent can be used.

The conductive auxiliary agent is included in the solid components.

Examples of the conductive auxiliary agent include graphite (for example, natural graphite and artificial graphite), carbon black (for example, acetylene black, Ketjen black, and furnace black), amorphous carbon (for example, needle coke), carbon fiber (for example, vapor-grown carbon fiber and carbon nanotube), other carbonaceous materials (for example, graphene and fullerene), metal powder (for example, copper powder and nickel powder), metal fiber (for example, copper fiber and nickel fiber), and a conductive polymer (for example, polyaniline, polypyrrole, polythiophene, polyacetylene, and a polyphenylene derivative).

The conductive auxiliary agent may be used alone or in combination of two or more kinds thereof.

A content of the conductive auxiliary agent with respect to the total volume of the electrode material film is preferably 0.05% by volume to 5% by volume, more preferably 0.1% by volume to 4% by volume, and still more preferably 0.5% by volume to 3% by volume.

In the manufacturing method of a molded body for an electrode according to the present disclosure, the amount of the conductive auxiliary agent used is determined such that the content in the electrode material film is within the above-described range.

### (Electrolytic solution)

The electrolytic solution is not particularly limited, and a known electrolytic solution can be used. Examples of the electrolytic solution include an electrolytic solution containing an electrolyte and a solvent. Specific examples of the electrolytic solution include an electrolytic solution containing a lithium salt compound as the electrolyte and a carbonate compound as the solvent.

Examples of the lithium salt compound include lithium hexafluorophosphate. The electrolytic solution may contain only one kind of the lithium salt compound or may contain two or more kinds of the lithium salt compounds.

Examples of the carbonate compound include a chain-like carbonate compound such as ethyl methyl carbonate (also referred to as EMC), dimethyl carbonate (also referred to as DMC), and diethyl carbonate (DEC); and a cyclic carbonate compound such as ethylene carbonate (also referred to as EC) and propylene carbonate (also referred to as PC). The electrolytic solution may contain only one kind of the carbonate compound, may contain two or more kinds of the carbonate compounds, or may contain a combination of one or more kinds of the chain-like carbonate compounds and one or more kinds of the cyclic carbonate compounds.

As the electrolyte contained in the electrolytic solution, for example, a known inorganic solid electrolyte can also be used.

As a component of the electrolytic solution, for example, an ionic liquid may be used. The ionic liquid may be used as the electrolyte or the solvent.

A content of the electrolytic solution with respect to the total volume of the electrode material film is preferably 48% by volume or less, and may be 45% by volume or less, or 40% by volume or less.

The lower limit of the content of the electrolytic solution with respect to the total volume of the electrode material film is not limited, and may be 28% by volume or more, or 30% by volume or more.

### (Solvent)

The electrode material film may contain, as the liquid components, a solvent other than the solvent contained as the component of the electrolytic solution (hereinafter, also simply referred to as "solvent").

Examples of the solvent include an alcohol compound solvent, an ether compound solvent, an amide compound solvent, an amino compound solvent, a ketone compound solvent, an aromatic compound solvent, an aliphatic compound solvent, and a nitrile compound solvent.

A boiling point of the solvent at normal pressure (that is, 1 atm) is preferably 50°C or higher, and more preferably 70°C or higher. The upper limit of the boiling point of the solvent at normal pressure (that is, 1 atm) is preferably 250°C or lower, and more preferably 220°C or lower.

The solvent may be used alone or in combination of two or more kinds thereof.

A content of the liquid components (that is, the electrolytic solution and the solvent) with respect to the total volume of the electrode material film is preferably 48% by volume or less, more preferably 45% by volume or less, and still more preferably 40% by volume or less.

The lower limit of the content of the liquid components with respect to the total volume of the electrode material film is not limited, and may be 28% by volume or more, or 30% by volume or more.

The liquid component contained in the electrode material film, that is, the component in the electrode material film, which is in a liquid state at 25°C, is preferably in a liquid state even at -10°C and preferably in a liquid state even at -20°C. That is, the component in the electrode material film, which is in a liquid state at 25°C, is preferably a component which does not solidify at -10°C, and preferably a component which does not solidify at -20°C.

### (Other components)

The electrode material film may contain a binder, a dispersant, and other additives in addition to the above-described components. However, in the electrode material film, from the viewpoint of improving the energy density, it is preferable that a content of the binder is low, and it is more preferable that the binder is not contained.

Examples of the binder include a fluorine-containing resin, a hydrocarbon-based thermoplastic resin, an acrylic resin, and a urethane resin.

In addition, the dispersant may be a known dispersant which can disperse a dispersion target.

Furthermore, as the other additives, known additives added to the electrode can be used.

### <<Molded body for sheet-like electrode>>

The molded body for a sheet-like electrode obtained by the manufacturing method of a molded body for an electrode according to the present disclosure can be used as various electrodes. The molded body for a sheet electrode may be used as it is as an electrode, or may be further processed to be used as an electrode.

The molded body for a sheet-like electrode is preferably a molded body for an electrode of a semi-solid state secondary battery.

From the viewpoint of improving battery performance (for example, discharge capacity and output characteristics), the thickness of the molded body for a sheet-like electrode is preferably 70 µm to 230 µm and the concentration of solid components is preferably 50% by volume to 80% by volume, same as in the above-described electrode material film.

The thickness of the molded body for a sheet-like electrode is measured by the same method as the average thickness of the electrode material film. In addition, the concentration of solid components of the molded body for a sheet-like electrode is also calculated by the same method as the concentration of solid components of the electrode material film.

The molded body for a sheet electrode, obtained by the manufacturing method of a molded body for an electrode according to the present disclosure, is formed on the support, but the support-attached molded body for a sheet-like electrode tends to have high smoothness of the support. This is because, in the manufacturing method of a molded body for an electrode according to the present disclosure, the molded body for a sheet-like electrode having a high concentration of solid components can be manufactured, but a large pressure is not required in the process.

Specifically, in a case where the support is a collector, an arithmetic average roughness Ra of the collector in the molded body for a sheet-like electrode with a collector is preferably 0.1 nm to 1,000 nm and more preferably 1 nm to 30 nm.

In addition, in a case where the support is a collector, the molded body for a sheet-like electrode with a collector tends not to require a coating layer on the surface. In general, the coating layer of the collector is provided in order to make the surface rough. By roughening the surface of the collector, the adhesiveness to the material applied onto the collector can be enhanced. In the manufacturing method of a molded body for an electrode according to the present disclosure, a mixture containing the granules is used, and since the mixture containing the granules has favorable adhesiveness to the support, a coating layer in the collector is not necessary.

Therefore, in a case where the support is a collector, it is preferable that the collector in the molded body for a sheet-like electrode with a collector does not have a coating layer.

Furthermore, in the molded body for a sheet-like electrode, a content of a conductive auxiliary agent having a needle-like shape or a fibrous shape tends to be high. In order to manufacture the molded body for a sheet-like electrode having a high concentration of solid components, an electrode material which contains a large amount of solid components such as a conductive auxiliary agent and an electrode active material and contains a small amount of an electrolytic solution is often used after being uniformly dispersed by applying a very high pressure. Due to the high pressure during the dispersion treatment, the needle-like shape or the fibrous shape of the conductive auxiliary agent is destroyed (for example, cut), and thus the conductive auxiliary agent having a needle-like shape or a fibrous shape remaining in the obtained molded body for a sheet-like electrode is small. In the manufacturing method of a molded body for an electrode according to the present disclosure, by using the granules, the dispersion treatment in a case of obtaining the mixture can be performed at a low pressure. As a result, in the molded body for a sheet-like electrode manufactured by the manufacturing method of a molded body for an electrode according to the present disclosure, the content of the conductive auxiliary agent having a needle-like shape or a fibrous shape is increased.

### Examples

Hereinafter, the present disclosure will be described in detail with reference to Examples, but the present disclosure is not limited thereto.

Each step in each example described later was performed in a dry room (low-dew point room) at 22°C.

### [Preparation of composite granules (G1-1)]

Composite granules (G1-1) were obtained as follows.

A powder in which 2 g of a conductive auxiliary agent (Ketjen black) and 174 g of a positive electrode active material (lithium iron phosphate) were mixed and dispersed was prepared. The mixture was dry-granulated with a roller compactor FT of FREUND-TURBO CORPORATION, and a granulated product (granules) having a desired size was taken out with a sieve.

A volume average particle diameter of the obtained composite granules **(G1-1)** was 200 µm.

### [Preparation of composite granules (G1-2) and (G1-3)]

Composite granules (G1-2) having a volume average particle diameter of 100 µm and composite granules (G1-3) having a volume average particle diameter of 500 µm were obtained by, in the preparation of the composite granules (G1-1), changing the conditions for taking out the granulated product (granules) having a desired size with a sieve.

### [Preparation of granules (G2) of electrode active material]

Granules (G2) were obtained as follows.

176 g of a positive electrode active material (lithium iron phosphate) was dry-granulated with a roller compactor FT of FREUND-TURBO CORPORATION, and a granulated product (granules) having a desired size was taken out with a sieve.

A volume average particle diameter of the obtained granules (G2) was 200 µm.

### [Preparation of granules (G3) of conductive auxiliary agent]

Granules (G3) were obtained as follows.

20 g of a conductive auxiliary agent (Ketjen black) was dry-granulated with a roller compactor FT of FREUND-TURBO CORPORATION, and a granulated product (granules) having a desired size was taken out with a sieve.

A volume average particle diameter of the obtained granules (G3) was 40 µm.

### [Preparation of electrolytic solution (X)]

LiPF₆ (electrolyte) was mixed with a mixed solution obtained by mixing ethylene carbonate (EC), propylene carbonate (PC), and diethyl carbonate (DEC), and then vinylene carbonate (VC) was further mixed therewith to obtain an electrolytic solution (X).

### [Preparation of support]

Support (S1): positive electrode collector (aluminum foil, average thickness: 20 µm, Ra: 0.5 µm)
The Ra of the collector described above refers to an arithmetic average roughness Ra on a surface on which the electrode material film is formed.

### [Preparation of pressing member]

### Blade (B1): blade made of stainless steel

### <Example 1>

120 g of the composite granules (G1-1) and 32 g of the electrolytic solution (X) were stirred and mixed at 700 revolutions per minute (rpm; the same applies hereinafter) for 1 minute with a mixer (AWATORI RENTARO ARE-310, manufactured by THINKY Corporation) to obtain a mixture (M1).

As shown in Fig. 1, the mixture (M1) was applied onto the support (S1) being transported using a biaxial screw feeder of Seiwa Giken Co., Ltd., and a film having a thickness of approximately 300 µm was formed.

Subsequently, as shown in Fig. 1, the film formed on the support was pressed using the blade (B1). Specifically, the blade 30 was disposed such that a distance between the surface of the support 10 and the distal end of the blade 30 was 200 µm. Next, as shown in Fig. 1, the support 10 was transported and moved in the arrow X direction, and the film 24 formed on the support 10 was brought into contact with the blade 30 which was ultrasonically vibrating, and passed through the void. As a result, an electrode material film having a size of 200 mm × 150 mm × 200 µm (thickness) was formed on the support.

A concentration of solid components of the obtained electrode material film was 56% by volume.

### <Example 2>

118.6 g of the granules (G2) of the electrode active material and 1.4 g of a conductive auxiliary agent (Ketjen black) were mixed and dispersed. 120 g of the obtained mixture and 32 g of the electrolytic solution (X) were stirred and mixed at 700 rpm for 1 minute with a mixer (AWATORI RENTARO ARE-310, manufactured by THINKY Corporation) to obtain a mixture (M2).

An electrode material film having a size of 210 mm × 150 mm × 200 µm (thickness) was formed on the support in the same manner as in Example 1, except that the obtained mixture (M2) was used.

A concentration of solid components of the obtained electrode material film was 56% by volume.

### <Example 3>

1.4 g of the granules (G3) of the conductive auxiliary agent and 118.6 g of a positive electrode active material (lithium iron phosphate) were mixed and dispersed. 120 g of the obtained mixture and 32 g of the electrolytic solution (X) were stirred and mixed at 700 rpm for 1 minute with a mixer (AWATORI RENTARO ARE-310, manufactured by THINKY Corporation) to obtain a mixture (M3).

An electrode material film having a size of 210 mm × 150 mm × 200 µm (thickness) was formed on the support in the same manner as in Example 1, except that the obtained mixture (M3) was used.

A concentration of solid components of the obtained electrode material film was 56% by volume.

### <Example 4>

(1) LiPF₆ (electrolyte) was mixed with a mixed solution obtained by mixing ethylene carbonate (EC), propylene carbonate (PC), and diethyl carbonate (DEC), and then vinylene carbonate (VC) was further mixed therewith; 64 g of the obtained mixed solution was taken out, and used as an electrolytic solution X1.
(2) 0.4 g of a conductive auxiliary agent (Ketjen black) and 34.1 g of a positive electrode active material (iron phosphate) were stirred at 1,500 rpm for 30 seconds with a mixer (AWATORI RENTARO ARE-310, manufactured by THINKY Corporation) to prepare a kneaded material Y1 (34.5 g).
(3) The electrolytic solution X1 (64 g) was added to the kneaded material Y1 (81 g), and the mixture was stirred at 1,500 rpm for 120 seconds with a mixer (AWATORI RENTARO ARE-310, manufactured by THINKY Corporation) to obtain a positive electrode material (1-1).

In the obtained positive electrode material (1-1), a volume ratio of the solid components and the liquid components was 15:85.

Subsequently, as shown in Fig. 2, the positive electrode material (1-1) was applied onto the transported support (S1) using a doctor blade to form the film 50 having a concentration of solid components of 15% by volume and a thickness of 100 µm.

Thereafter, the composite granules (G1-1) were applied onto the film 50 using an electromagnetic feeder (linear feeder of SINFONIA TECHNOLOGY CO., LTD.) so that a thickness thereof was 100 µm.

Thereafter, in the same manner as in Example 1, the film formed on the support was pressed using the blade (B1) to form an electrode material film having a size of 200 mm × 150 mm × 200 µm (thickness) on the support.

A concentration of solid components of the obtained electrode material film was 57.5% by volume.

### <Example 5>

As shown in Fig. 2, the electrolytic solution (X) was applied onto the transported support (S1) using a doctor blade to form the film 50 having a concentration of solid components of 0% by volume and a thickness of 85 µm.

Thereafter, the composite granules (G1-1) were applied onto the film 50 using an electromagnetic feeder (linear feeder of SINFONIA TECHNOLOGY CO., LTD.) so that a thickness thereof was 115 µm.

Thereafter, in the same manner as in Example 1, the film formed on the support was pressed using the blade (B1) to form an electrode material film having a size of 200 mm × 150 mm × 200 µm (thickness) on the support.

A concentration of solid components of the obtained electrode material film was 57.5% by volume.

### <Examples 6 and 7>

An electrode material film having a thickness of 200 µm and a concentration of solid components of 56% by volume was obtained on the support in the same manner as in Example 1, except that the composite granules (G1-1) were changed to the composite granules (G1-2) or the composite granules (G1-3).

### [Evaluation]

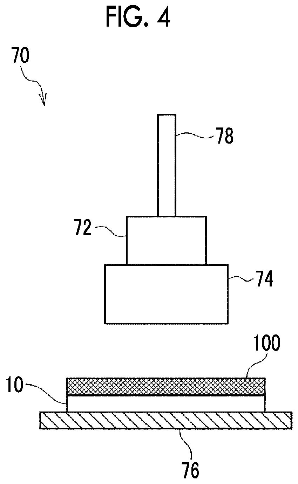

An image inspection device 70 including a CCD camera 72 and a line illumination 74 as shown in Fig. 4 was self-made, and formability of the electrode material film (the molded body for a sheet-like electrode) was evaluated using the image inspection device 70.

In the image inspection device 70, the support 10 on which the electrode material film 100 was formed was placed on a XY stage 76, and the CCD camera 72 and the line illumination 74 installed above the electrode material film 100 were used, whereby the entire surface (that is, the entire upper surface) of the electrode material film 100 could be imaged. Here, the electrode material film 100 could be moved in the XY direction by the XY stage 76, and the CCD camera 72 and the line illumination 74 could be moved in the Z direction with a Z-axis guide 78 to which the CCD camera 72 and the line illumination 74 were connected.

Using the above-described image inspection device 70, the XY stage 76 and the Z-axis guide 78 were used to move the electrode material film 100, the CCD camera 72, and the line illumination 74, respectively; and 140 images of the entire surface of 210 mm × 150 mm of the electrode material film 100 obtained in each of the above-described examples were captured in a 16 mm square visual field. In a case where the electrode material film was largely broken, a change in tint was observed in the captured image, and thus the breakage could be detected by the change in tint. In addition, in a case where the electrode material film 100 was slightly broken, light was scattered by the electrode material film at the broken portion, and thus the breakage could be detected by the scattering of the light.

By the above-described method, the captured images (140 images) of the entire surface of the electrode material film were acquired, and the number of captured images in which the collapse was observed was counted. The proportion of the number of captured images in which collapse was observed to the total number of captured images (140 images) in which the entire surface of the electrode material film was imaged was determined, and formability was evaluated according to the following standard. It could be evaluated that, as the proportion of the number of captured images in which the collapse was observed was smaller, the formability was better. In the present disclosure, it is desirable that the proportion of the number of captured images in which the collapse was observed is 10% or less. The results are shown in Table 1.

### -Evaluation standard-

A: proportion of the number of captured images in which the collapse was observed was 1% or less.
B: proportion of the number of captured images in which the collapse was observed was more than 1% and 3% or less.
C: proportion of the number of captured images in which the collapse was observed was more than 3% and 5% or less.
D: proportion of the number of captured images in which the collapse was observed was more than 5% and 10% or less.
E: proportion of the number of captured images in which the collapse was observed was more than 10%.

**[Table 1]**

| | Type of granules | Timing of granule mixing | Evaluation result of formability |
|---|---|---|---|
| Example 1 | Composite granules (G1-1) | Before application onto support | A |
| Example 2 | Granules (G2) of electrode active material | Before application onto support | C |
| Example 3 | Granules (G3) of conductive auxiliary agent | Before application onto support | D |
| Example 4 | Composite granules (G1-1) | After application onto support | A |
| Example 5 | Composite granules (G1-1) | After application onto support | C |
| Example 6 | Composite granules (G1-2) | Before application onto support | B |
| Example 7 | Composite granules (G1-3) | Before application onto support | B |

According to Table 1, it was found that, by using the granules, excellent formability was obtained. It was found that, by using the composite granule among the granules, the formability was more excellent.

### Explanation of References

- 10:: support
- 20:: applying unit
- 22:: mixture containing granules
- 24:: film of mixture containing granules
- 30:: blade
- 40:: applying unit
- 42:: composite granules
- 44:: film of composite granules
- 50:: film of electrolytic solution
- 60:: pressurization roller
- 62:: film
- 70:: image inspection device
- 72:: CCD camera
- 74:: line illumination
- 76:: XY stage
- 78:: Z-axis guide
- 100:: electrode material film
- 102:: pressurized electrode material film
- X:: transport direction of support

The disclosure of JP2022-120970 filed on July 28, 2022 is incorporated in the present specification by reference. All documents, patent applications, and technical standards described in the present specification are incorporated herein by reference to the same extent as in a case of being specifically and individually noted that individual documents, patent applications, and technical standards are incorporated herein by reference.

## Claims

1. A manufacturing method of a molded body for a sheet-like electrode, the method comprising:
a first step of preparing granules comprising one or both of an electrode active material and a conductive auxiliary agent; and
a second step of obtaining a mixture of an electrode active material, a conductive auxiliary agent, and an electrolytic solution using the granules prepared in the first step,
wherein an electrode material film comprising the electrode active material, the conductive auxiliary agent, and the electrolytic solution are formed on a support.

2. The manufacturing method of a molded body for a sheet-like electrode according to claim 1,
wherein the first step comprises a granulation step of granulating one or both of the electrode active material and the conductive auxiliary agent.

3. The manufacturing method of a molded body for a sheet-like electrode according to claim 2,
wherein a maximum filling rate of the granules obtained by the granulation step is 55% by volume to 95% by volume.

4. The manufacturing method of a molded body for a sheet-like electrode according to claim 2 or 3,
wherein the granulation step is a step of granulating the electrode active material and the conductive auxiliary agent in combination.

5. The manufacturing method of a molded body for a sheet-like electrode according to claim 4,
wherein a volume average particle diameter of granules obtained by granulating the electrode active material and the conductive auxiliary agent in combination is 10 µm to 1,000 µm.

6. The manufacturing method of a molded body for a sheet-like electrode according to claim 2 or 3,
wherein the granulation step is a step of granulating one of the electrode active material or the conductive auxiliary agent or a step of granulating each of the electrode active material and the conductive auxiliary agent.

7. The manufacturing method of a molded body for a sheet-like electrode according to claim 6,
wherein a volume average particle diameter of granules obtained by granulating the electrode active material is 10 µm to 1,000 µm.

8. The manufacturing method of a molded body for a sheet-like electrode according to claim 6,
wherein a volume average particle diameter of granules obtained by granulating the conductive auxiliary agent is 0.2 µm to 50 µm.

9. The manufacturing method of a molded body for a sheet-like electrode according to claim 2,
wherein the granulation is performed by a dry-type granulation method.

10. The manufacturing method of a molded body for a sheet-like electrode according to claim 2,
wherein the granulation is performed by a wet-type granulation method using at least a part of the electrolytic solution.

11. The manufacturing method of a molded body for a sheet-like electrode according to claim 1 or 2,
wherein the electrode material film comprising the electrode active material, the conductive auxiliary agent, and the electrolytic solution is formed on the support by applying the mixture obtained in the second step onto the support.

12. The manufacturing method of a molded body for a sheet-like electrode according to claim 1 or 2,
wherein the second step is a step of obtaining the mixture of the electrode active material, the conductive auxiliary agent, and the electrolytic solution on the support by applying the granules prepared in the first step onto the support.

13. The manufacturing method of a molded body for a sheet-like electrode according to claim 1 or 2, further comprising:
a step of applying pressure or applying vibration to the mixture of the electrode active material, the conductive auxiliary agent, and the electrolytic solution, which is disposed on the support.

14. The manufacturing method of a molded body for a sheet-like electrode according to claim 1 or 2,
wherein the electrode material film has a thickness of 70 µm to 230 µm and a concentration of solid components of 50% by volume to 80% by volume.
